# EUROPEAN PATENT SPECIFICATION

(11) **EP 4 605 329 B1**
(45) Date of publication and mention of the grant of the patent: **29.07.2026**
(21) Application number: 23789945.5
(22) Date of filing: 12.10.2023
(51) Int. Cl.: B65H 21/00, B65H 35/00, B65H 35/06, B23K 11/11, B23K 11/36

(54) **METHOD AND APPARATUS FOR STATIC SPLICING OF STRIPS OF MATERIAL**
VERFAHREN UND VORRICHTUNG ZUM STATISCHEN SPLEISSEN VON MATERIALBAHNEN
PROCÉDÉ ET DISPOSITIF POUR L'ÉPISSAGE STATIQUE DE BANDES DE MATÉRIAU

(30) Priority: 19.10.2022 EP 22202510
(43) Date of publication of application: 27.08.2025
(73) Proprietor: Philip Morris Products S.A., 2000 Neuchâtel (CH)
(72) Inventor: LA PORTA, Pietro Davide, 20121 Milano (IT); SERENARI, Alberto, 40133 Bologna (IT)
(74) Representative: Abitz & Partner
(86) International application number: PCT/EP2023/078356
(87) International publication number: WO 2024/083631

(56) References cited:
- EP-A1- 0 381 115
- WO-A1-95/09794
- FR-A3- 2 692 566
- US-A- 4 120 739

## Description

The present disclosure relates to a splicing head for splicing two strips of material. The present disclosure further relates to a method for splicing two strips of material. The present disclosure further relates to an apparatus for splicing two strips of material. An exemplary splicing head and an exemplary splicing method for two strips of material is disclosed by document US 4,120,739.

In a manufacturing operation in which a strip of material provided wound on a bobbin is processed, it may be desired to unwind the strip from the bobbin at a high speed, so that the strip can be processed at a high speed as well. For example, in the production of aerosol generating articles, the strip may be a strip of susceptor material, for example a metal strip.

When the bobbin is empty, the manufacturing or production process has to be slowed down or stopped in order to replace the empty bobbin by a new one. Similarly, when the strip is defective, the manufacturing or production process has to be slowed down or stopped in order to replace the defective strip by a new one. In order to avoid a complete stoppage of production, two strips wound on two different bobbins may be provided - an "old" bobbin and a "new" bobbin. The strips can be spliced, so that a new bobbin with a defect-free strip replaces the old one with the defective strip, or an old one on which the strip is to run out. However, the joint portion of the strip, where the old strip is spliced with the new strip, may exhibit a reduced stability and may more easily rupture due to physical stress when being further processed downstream of the splicing head.

It would be desirable to provide a splicing mechanism that may allow splicing of two metal strips without removing the strips from the manufacturing line during splicing. It would be desirable to provide a splicing mechanism that reduces or avoids downtime of the manufacturing line due to splicing. It would be desirable to provide a splicing mechanism that may reduce the mean time to restart the equipment. It would be desirable to provide a splicing mechanism that may avoid stopping of the machinery during splicing. It would be desirable to provide a more robust splicing mechanism. It would be desirable to provide a splicing mechanism with a high mechanical stability of the spliced strip. It would be desirable to provide a splicing mechanism that reduces the risk of defects or rupture of the spliced strip. It would be desirable to provide a splicing mechanism that may reduce waste of the strip material. It would be desirable to provide an economically more favorable splicing mechanism. It would be desirable to provide an ecologically more favorable splicing mechanism.

According to an embodiment of the invention there is provided a splicing head for splicing two strips of material. The splicing head may comprise a processing direction extending from an upstream end to a downstream end. The splicing head may comprise an orthogonal direction perpendicular to the processing direction. The splicing head may comprise a first channel for guiding a first strip of material and a second channel for guiding a second strip of material. The first and second channels may be arranged in parallel along the processing direction. The splicing head may comprise an upstream cutting plate and a downstream cutting plate. The upstream and downstream cutting plates may be arranged between the first channel and the second channel along the orthogonal direction. The splicing head may comprise an upstream cutting blade. The splicing head may comprise a downstream cutting blade. The upstream cutting blade and the downstream cutting blade may be arranged at opposite sides of the first and second channels in the orthogonal direction such that the upstream cutting blade is located adjacent to the second channel and the downstream cutting blade is located adjacent to the first channel. The splicing head may comprise a welding station arranged between the upstream cutting blade and the downstream cutting blade along the processing direction. The welding station may comprise at least one welding electrode and a welding plate. The at least one welding electrode and the welding plate may be arranged at opposite sides of the first and second channels in the orthogonal direction.

According to an embodiment of the invention there is provided a splicing head for splicing two strips of material. The splicing head comprises a processing direction extending from an upstream end to a downstream end. The splicing head comprises an orthogonal direction perpendicular to the processing direction. The splicing head comprises a first channel for guiding a first strip of material and a second channel for guiding a second strip of material. The first and second channels are arranged in parallel along the processing direction. The splicing head comprises an upstream cutting plate and a downstream cutting plate. The upstream and downstream cutting plates are arranged between the first channel and the second channel along the orthogonal direction. The splicing head comprises an upstream cutting blade and a downstream cutting blade. The upstream cutting blade and the downstream cutting blade are arranged at opposite sides of the first and second channels in the orthogonal direction such that the upstream cutting blade is located adjacent to the second channel and the downstream cutting blade is located adjacent to the first channel. The splicing head comprises a welding station arranged between the upstream cutting blade and the downstream cutting blade along the processing direction. The welding station comprises at least one welding electrode and a welding plate. The at least one welding electrode and the welding plate are arranged at opposite sides of the first and second channels in the orthogonal direction.

A splicing mechanism that may reduce the mean time to restart the equipment is provided. A splicing mechanism that may avoid stopping of the machinery during splicing is provided. A more robust splicing mechanism is provided. A splicing mechanism with a high mechanical stability of the spliced strip is provided. A splicing mechanism that reduces the risk of defects or rupture of the spliced strip is provided. Defects or rupture of the spliced strip may lead to defective strip portions downstream of the splicing head or defective goods which need to be discarded. Therefore, a splicing mechanism that may reduce waste of the strip material is provided. A splicing mechanism that may be economically more favorable is provided. A splicing mechanism that may be ecologically more favorable is provided.

The upstream cutting blade may be located directly downstream of the upstream cutting plate. The downstream cutting blade may be located directly upstream of the downstream cutting plate. The upstream cutting blade may be located directly downstream of the upstream cutting plate and the downstream cutting blade may be located directly upstream of the downstream cutting plate.

The at least one welding electrode may comprise an upstream welding electrode and a downstream welding electrode. The welding station may be configured to apply a current pulse between the upstream welding electrode and the downstream welding electrode.

The splicing head may comprise one or more guiding-and-alignment means for guiding and aligning one or both of the upstream and downstream cutting plates with respect to the respective upstream and downstream cutting blades. The guiding-and-alignment means may guide the cutting plates to align directly adjacent to their corresponding cutting blades along the processing direction for performing a scissor cut effect and avoiding any accidental bump of the cutting plates on the respective cutting blades.

One or both of the upstream and downstream cutting blades may comprise a guiding-and-alignment means. One or both of the upstream and downstream cutting blades may have an L-shape comprising a horizontal cutting part for cutting a strip of material and an orthogonal aligning part being parallel to the orthogonal direction and functioning as a guiding and alignment means for guiding and aligning the cutting plate with respect to the respective cutting blade.

The splicing head may comprise one or more alignment means for aligning the first and second strips on top of each other. The splicing head may comprise an alignment means comprising one or more pairs of engaging structures being arranged at opposite sides of the first and second channels in the orthogonal direction such that a first structure of a pair is located adjacent to the second channel and an engaging second structure of the pair is located adjacent to the first channel. The first and second strips may be guided along the first and second channels between the engaging pairs of structures and may thereby be aligned on top of each other. The engaging structures may be engaging tripods.

One or both of the upstream and downstream cutting blades may be configured to only allow a limited movement of the cutting blade along the orthogonal direction. For example, the upstream cutting blade may be configured to only move orthogonally beyond the edge of the upstream cutting plate which faces the upstream cutting blade by a distance of less than 80 percent, or less than 75 percent, or less than 50 percent of the thickness of the cutting plate in the orthogonal direction. For example, the upstream cutting blade may be configured to only move orthogonally beyond the edge of the upstream cutting plate which faces the upstream cutting blade by a distance of less than 10 millimeters, less than 5 millimeters, or less than 2 millimeters.

For example, the downstream cutting blade may be configured to only move orthogonally beyond the edge of the downstream cutting plate which faces the downstream cutting blade by a distance of less than 80 percent, or less than 75 percent, or less than 50 percent of the thickness of the cutting plate in the orthogonal direction. For example, the downstream cutting blade may be configured to only move orthogonally beyond the edge of the downstream cutting plate which faces the downstream cutting blade by a distance of less than 10 millimeters, less than 5 millimeters, or less than 2 millimeters.

By limiting the orthogonal movement of one or both of the upstream and downstream cutting blades, it may be additionally assured that each cutting blade only cuts one of the strips and the other strip will not be accidentally cut or weakened by the respective blade.

One or both of the upstream cutting plate and the downstream cutting plate may be configured to be movable along a third direction. The third direction may be perpendicular to both the processing direction and the orthogonal direction.

The invention further relates to a method for splicing two strips of material. The method may comprise providing a splicing head as described herein. The method may comprise providing a first strip of material and a second strip of material. The method may comprise guiding the first and second strips along the first and second channels of the splicing head. The method may comprise stopping transport along the processing direction of at least a segment of the first strip and at least a segment of the second strip to provide static segments of the first and second strips at the position of the splicing head. The method may comprise moving the at least one welding electrode and the welding plate towards one another along the orthogonal direction such the first and second strips contact each other and are positioned between the at least one welding electrode and the welding plate. The method may comprise applying an electric current to the welding station to weld the first strip and the second strip to one another. The method may comprise moving the upstream cutting blade towards the upstream cutting plate along the orthogonal direction to cut off an upstream end of the second strip from the welded first and second strips. The method may comprise moving the downstream cutting blade towards the downstream cutting plate along the orthogonal direction to cut off a downstream end of the first strip from the welded first and second strips.

The invention further relates to a method for splicing two strips of material. The method comprises providing a splicing head as described herein. The method comprises providing a first strip of material and a second strip of material. The method comprises guiding the first and second strips along the first and second channels of the splicing head. The method comprises stopping transport along the processing direction of at least a segment of the first strip and at least a segment of the second strip to provide static segments of the first and second strips at the position of the splicing head. The method comprises moving the at least one welding electrode and the welding plate towards one another along the orthogonal direction such the first and second strips contact each other and are positioned between the at least one welding electrode and the welding plate. The method comprises applying an electric current to the welding station to weld the first strip and the second strip to one another. The method comprises moving the upstream cutting blade towards the upstream cutting plate along the orthogonal direction to cut off an upstream end of the second strip from the welded first and second strips. The method comprises moving the downstream cutting blade towards the downstream cutting plate along the orthogonal direction to cut off a downstream end of the first strip from the welded first and second strips.

The method steps may be conducted consecutively in accordance to the sequence of mentioning above.

One or more of the method steps may be conducted simultaneously. For example, the method may comprise moving the upstream cutting blade towards the upstream cutting plate along the orthogonal direction to cut off an upstream end of the second strip from the welded first and second strips and, simultaneously, moving the downstream cutting blade towards the downstream cutting plate along the orthogonal direction to cut off a downstream end of the first strip from the welded first and second strips. For example, the steps of moving the at least one welding electrode and the welding plate towards one another along the orthogonal direction such the first and second strips contact each other and are positioned between the at least one welding electrode and the welding plate, moving the upstream cutting blade towards the upstream cutting plate along the orthogonal direction, and moving the downstream cutting blade towards the downstream cutting plate along the orthogonal direction may be conducted simultaneously, or may in parts be conducted simultaneously.

By the static splicing mechanism of the invention, there may be less mechanical friction between the electrodes and the metal strips in comparison to a dynamic splicing mechanism, wherein the transport of the strips is not stopped during splicing. Thereby, there may be less wear out of the electrodes and the electrodes may last longer. An economically more favorable splicing mechanism may be provided.

With the static splicing mechanism of the invention, there may be less misalignment of the metal strips on top of each other in comparison to a dynamic splicing mechanism because moving strips are more likely to be unintentionally be deflected in comparison to static strips. A more robust spliced strip may be provided.

The step of applying an electric current to the welding station to weld the first strip and the second strip to one another may be conducted in different ways.

For example, the at least one welding electrode may be a single electrode and the electric current may be applied between the single electrode and the welding plate.

For example, the at least one welding electrode may be a first electrode and a second electrode and the electric current may be applied in a first pulse between the first electrode and the welding plate and, then, in a second pulse between the second electrode and the welding plate.

For example, the at least one welding electrode may be a first electrode and a second electrode and the electric current may be applied in a first pulse between the first electrode and the welding plate and, at the same time, in a second pulse between the second electrode and the welding plate.

For example, the at least one welding electrode may be a first electrode and a second electrode and the electric current may be applied in a single pulse between the first electrode and the welding plate and between the second electrode and the welding plate.

For example, the at least one welding electrode may be a first electrode and a second electrode and the electric current may be applied between the first electrode and the second electrode.

The first electrode may be located upstream of the second electrode along the processing direction. The first electrode may be located downstream of the second electrode along the processing direction.

The method may comprise, after the step of moving the downstream cutting blade towards the downstream cutting plate along the orthogonal direction to cut off a downstream end of the first strip from the welded first and second strips, a step of retracting the at least one welding electrode and the welding plate along the orthogonal direction. The method may comprise, after the step of moving the downstream cutting blade towards the downstream cutting plate along the orthogonal direction to cut off a downstream end of the first strip from the welded first and second strips, a step of retracting the at least one welding electrode and the welding plate along the orthogonal direction and then a step of retracting the upstream and downstream cutting blades along the orthogonal direction. The method may comprise, after the step of moving the downstream cutting blade towards the downstream cutting plate along the orthogonal direction to cut off a downstream end of the first strip from the welded first and second strips, a step of retracting the at least one welding electrode and the welding plate along the orthogonal direction and, simultaneously, a step of retracting the upstream and downstream cutting blades along the orthogonal direction.

The method may comprise a step of aligning the first and second strips of material on top of each other. The step of alignment may be performed one or both of before and during the strips are welded. The step of alignment may be conducted by one or more alignment means as described herein.

The method may comprise a step of guiding-and-aligning one or both of the upstream and downstream cutting plates with respect to the respective upstream and downstream cutting blades. The step of guiding-and-aligning may be performed one or both of before and during the strips are welded. The step of guiding-and-aligning may be conducted by one or more guiding-and-alignment means as described herein.

The method may comprise, after the step of moving the downstream cutting blade towards the downstream cutting plate along the orthogonal direction to cut off a downstream end of the first strip from the welded first and second strips, a step of retracting the upstream cutting plate and the downstream cutting plate along the third direction.

Preferably, the first and second strips of material are not pre-weakened before splicing.

The first and second strips of material may comprise a susceptor material. The susceptor material may comprise one or more metals. The susceptor material may comprise aluminium. The first and second strips of material may be configured to be used as a susceptor in an aerosol-generating article. The first and second strips may be susceptor strips for use in an aerosol-generating article.

As used herein, a "susceptor" or "susceptor element" refers to an element that heats up when subjected to an alternating magnetic field. This may be the result of eddy currents induced in the susceptor element, hysteresis losses, or both eddy currents and hysteresis losses. During use, the susceptor element is located in thermal contact or close thermal proximity with an aerosol-forming substrate received in the aerosol-generating device or cartridge. In this manner, the aerosol-forming substrate is heated by the susceptor such that an aerosol is formed.

The susceptor element may be formed from any material that can be inductively heated to a temperature sufficient to generate an aerosol from the aerosol-forming substrate. Preferred susceptor elements comprise a metal or carbon.

A preferred susceptor element may comprise or consist of a ferromagnetic material, for example a ferromagnetic alloy, ferritic iron, or a ferromagnetic steel or stainless steel. A suitable susceptor element may be, or comprise, aluminium.

Suitable susceptor elements may comprise a non-metallic core with a metal layer disposed on the non-metallic core, for example metallic tracks formed on a surface of a ceramic core. A susceptor element may have a protective external layer, for example a protective ceramic layer or protective glass layer encapsulating the susceptor element. The susceptor element may comprise a protective coating formed by a glass, a ceramic, or an inert metal, formed over a core of susceptor element material.

The susceptor element may be arranged in thermal contact with the aerosol-forming substrate of the aerosol-forming substrate portion in which the susceptor element is incorporated. Thus, when the susceptor element heats up the aerosol-forming substrate is heated up and an aerosol is formed. Preferably the susceptor element is arranged in direct physical contact with the aerosol-forming substrate, for example within the aerosol-forming substrate.

The first and second strips of material may have a width of at least about 1 millimeters, more preferably at least about 2 millimeters. Typically, the susceptor may have a width of up to 8 millimeters, preferably of less than or equal to about 6 millimeters. The first and second strips of material may have a substantially rectangular cross-section having a width of preferably from about 2 millimeters to about 8 millimeters, more preferably from about 3 millimeters to about 6 millimeters. The first and second strips of material may have a width of about 4 millimeters.

The first and second strips of material may have a thickness from about 10 micrometers to about 1,000 micrometers, preferably from about 20 micrometers to about 500 micrometers, more preferably from about 25 micrometers to about 250 micrometers, more preferably from about 30 micrometers to about 100 micrometers, more preferably from about 40 micrometers to about 80 micrometers. The first and second strips of material may have a thickness from about 57 micrometers to about 63 micrometers. Even more preferably, first and second strips of material may have a thickness from about 58 micrometers to about 62 micrometers. Most preferably, the first and second strips of material have a thickness of about 60 micrometers.

Preferably, the first and second strips are made of the same materials and have the same dimensions.

The transport of the strips of material may be performed at a speed of the strip between about 50 meters per minute and about 400 meters per minute.

A buffer unit may be provided downstream of the splicing head. The method may comprise one of stopping, or operating at lowered speed, or operating at normal speed, part of the processing line downstream of the buffer unit during the step of splicing the first strip and the second strip at the splicing head. The method may comprise buffering a given length of the first strip in the buffer unit before the step of splicing.

An upstream portion of the first strip may be wound on a first bobbin. An upstream portion of the second strip may be wound on a second bobbin. The method may comprise rejecting the first bobbin after the step of splicing. The method may comprise interchanging the position of the first bobbin and the position of the second bobbin after splicing.

The method may comprise providing an aerosol-forming substrate and forming a rod comprising the spliced strip and the aerosol-forming substrate.

According to an embodiment of the invention there is provided a method of forming an aerosol-generating article, comprising forming one or more rods as described herein and incorporating the one or more rods into an aerosol-generating article.

According to an embodiment of the invention there is provided an apparatus for splicing two strips of material. The apparatus comprises a processing line. The processing line comprises an upstream end and a downstream end. The processing line is configured for processing one or both of a first strip of material and a second strip of material. The apparatus comprises a splicing head as described herein. The splicing head is located between the upstream end and the downstream end of the processing line.

The apparatus may comprise a buffer unit. The buffer unit may be adapted to buffer a variable amount of the first strip or of the second strip. The buffer unit is located downstream of the splicing head.

The apparatus may comprise a quality sensor configured for detecting a value of a quality parameter at a detected portion of the first strip. The apparatus may comprise a controller in connection to the quality sensor. The controller may be configured to evaluate whether the value of the quality parameter falls within a predetermined threshold in order to determine whether or not the splicing routine is to be started. In case the value does not fall within the predetermined threshold, the quality of the detected portion of the first strip is acceptable. This means that normal processing of the first strip continues and splicing is not initiated. In case the value does fall within the predetermined threshold, the quality of the detected portion of the first strip is outside an acceptable range. This means that the splicing routine is initiated by the controller.

The quality sensor may comprise an optical sensor, preferably one or more of a photo sensor, a photo camera or a video camera. The optical sensor may include a light source.

The quality sensor may be configured for detecting one or more of a width of the first strip, a thickness of the first strip, and a presence or absence of holes or tears in the first strip. The quality sensor may be configured for detecting a width of the first strip, and the quality parameter may be the width of the first strip.

The first strip defines a width. The width of the strip is the dimension of the strip in a direction substantially perpendicular to the processing direction of the strip. The width of the strip is also substantially perpendicular to the thickness of the strip. In case the width is measured as the quality parameter, a width sensor adapted to measure the width of the first strip of material and to emit a signal on the basis of the width measurement may be used. The width sensor may be a distance sensor. The width sensor may include a light barrier sensor. The width sensor may include a camera.

Splicing may take place depending on the measured value of the width of the first strip.

The quality sensor may be, or may include, a distance sensor, adapted to measure the distance between the sensor and an outer surface of a bobbin holding a strip of material. When the distance is outside a pre-set range, then the quality sensor may indicate that the bobbin may be almost depleted.

Preferably, the evaluation of the one of more quality parameters of the first strip is performed before the buffering of the first strip.

The apparatus may comprise a first holder for holding the first strip of material and a second holder for holding the second strip of material. The first holder may be a first shaft adapted to hold in a rotatable manner a first bobbin of the first strip. The second holder may be a second shaft adapted to hold in a rotatable manner a second bobbin of the second strip.

An upstream portion of the first strip may be wound on a first bobbin. An upstream portion of the second strip may be wound on a second bobbin. The first bobbin may be formed by coils of the first strip of material. The first bobbin may be inserted in a first shaft adapted to rotate around its axis of rotation. The second bobbin may be formed by coils of the second strip of material. The second bobbin may be inserted in a second shaft adapted to rotate around its axis of rotation. The method may comprise a step of rejecting the first bobbin after the step of splicing. The method may comprise a step of interchanging the position of the first bobbin and the position of the second bobbin after splicing. Preferably, in the first shaft, a new bobbin, such as a third bobbin, to replace the first bobbin, is inserted.

The apparatus may comprise a bobbin holder unit comprising the first shaft and the second shaft. The bobbin holder unit may be adapted to interchange the position of the first shaft and the second shaft. For example, the bobbin holder unit may include a rotating disk and the first shaft and the second shaft may extend from the same face of the disk. Rotations of the disk may allow the interchange between the positions of the shafts.

The apparatus may comprise a rod former. The so formed rod is preferably used as a component of an aerosol-generating article.

As used herein, the term "strip" denotes a laminar element having a width and length substantially greater than the thickness thereof. The width of the strip of material is preferably is between about 1 millimeter and about 8 millimeters. The thickness of the strip of material is preferably comprised between about 20 micrometers and about 500 micrometers, more preferably between about 30 micrometers and about 80 micrometers, even more preferably between about 50 micrometers and 70 micrometers.

As used herein, the term "aerosol-generating article" refers to an article comprising an aerosol-forming substrate that is capable of releasing volatile compounds that can form an aerosol. "Aerosol-generating articles" according to the present invention may be in the form of articles in which an alkaloids containing material, such as a tobacco material, is heated to form an aerosol, rather than combusted, and articles in which an alkaloids-containing aerosol is generated from an alkaloids-containing material, for example from a tobacco extract, or other nicotine source, without combustion or heating. Aerosol-generating articles according to the invention may be whole, assembled aerosol forming articles or components of aerosol-generating articles that are combined with one or more other components in order to provide an assembled article for producing an aerosol, such as for example, the consumable part of a heated smoking device. The aerosol-generating article may comprise a susceptor strip being circumscribed by the aerosol-forming substrate.

With the term "upstream" or "downstream", reference is herein made to the processing direction of the strip.

As used herein, the term "perpendicular" is not necessarily limited to an angle of exactly 90 degrees, but may in some embodiments include angles deviating to some extent from a right angle. For example, a deviation of about 15 degrees or less, or about 10 degrees or less, or about 5 degrees or less, or about 2 degrees or less, or about 1 degree or less may be allowable. For example, an angle between the processing direction and the orthogonal direction may be between 75 degrees and 90 degrees, between 80 degrees and 90 degrees, between 85 degrees and 90 degrees, between 88 degrees and 90 degrees, or between 89 degrees and 90 degrees. The term "perpendicular" may be limited to an angle of about 90 degrees. The term "perpendicular" may be limited to an angle of 90 degrees.

As used herein, the term "parallel" is not necessarily limited to an angle of exactly 0 degrees, but may in some embodiments include angles deviating to some extent from a strict parallel directions. For example, a deviation of about 15 degrees or less, or about 10 degrees or less, or about 5 degrees or less, or about 2 degrees or less, or about 1 degree or less may be allowable. For example, an angle between the first channel and the second channel along the processing direction may be between 0 degrees and 15 degrees, between 0 degrees and 10 degrees, between 0 degrees and 5 degrees, between 0 degrees and 2 degrees, or between 0 degrees and 1 degrees. The term "parallel" may be limited to an angle of about 0 degrees. The term "parallel" may be limited to an angle of 0 degrees.

Below, there is provided a non-exhaustive list of non-limiting examples. Any one or more of the features of these examples may be combined with any one or more features of another example, embodiment, or aspect described herein.

Features described in relation to one embodiment may equally be applied to other embodiments of the invention.

The invention will be further described, by way of example only, with reference to the accompanying drawings in which:
Figs. 1a and 1b show a splicing head;
Figs. 2a to 2c show steps of a splicing method; and
Figs. 3a to 3c show a splicing head.

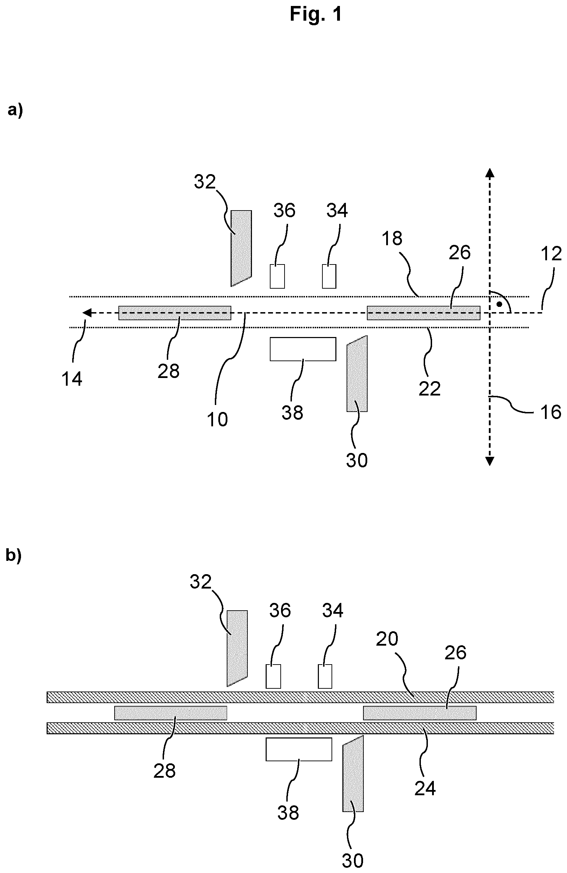

Fig. 1a schematically shows a splicing head for splicing two strips of material. The splicing head comprises a processing direction 10 extending from an upstream end 12 to a downstream end 14. The splicing head comprises an orthogonal direction 16 perpendicular to the processing direction 10. The splicing head comprises a first channel 18 for guiding a first strip of material 20 (see Fig. 1b) and a second channel 22 for guiding a second strip of material 24 (see Fig. 1b). The first and second channels 18, 22 are arranged in parallel along the processing direction 10. The splicing head comprises an upstream cutting plate 26 and a downstream cutting plate 28. The upstream and downstream cutting plates 26, 28 are arranged between the first channel 18 and the second channel 22 along the orthogonal direction 16. The splicing head comprises an upstream cutting blade 30 located directly downstream of the upstream cutting plate 26 and a downstream cutting blade 32 located directly upstream of the downstream cutting plate 28. The upstream cutting blade 30 and the downstream cutting blade 32 are arranged at opposite sides of the first and second channels 18, 22 in the orthogonal direction 16 such that the upstream cutting blade 30 is located adjacent to the second channel 22 and the downstream cutting blade 32 is located adjacent to the first channel 18. The splicing head comprises a welding station arranged between the upstream cutting blade 30 and the downstream cutting blade 32 along the processing direction 10. The welding station comprises an upstream welding electrode 34, a downstream welding electrode 36, and a welding plate 38. The welding electrodes 34, 36 and the welding plate 38 are arranged at opposite sides of the first and second channels 18, 22 in the orthogonal direction 16.

Fig. 1b shows the splicing head of Fig. 1a together with the first strip of material 20 and the second strip of material 24.

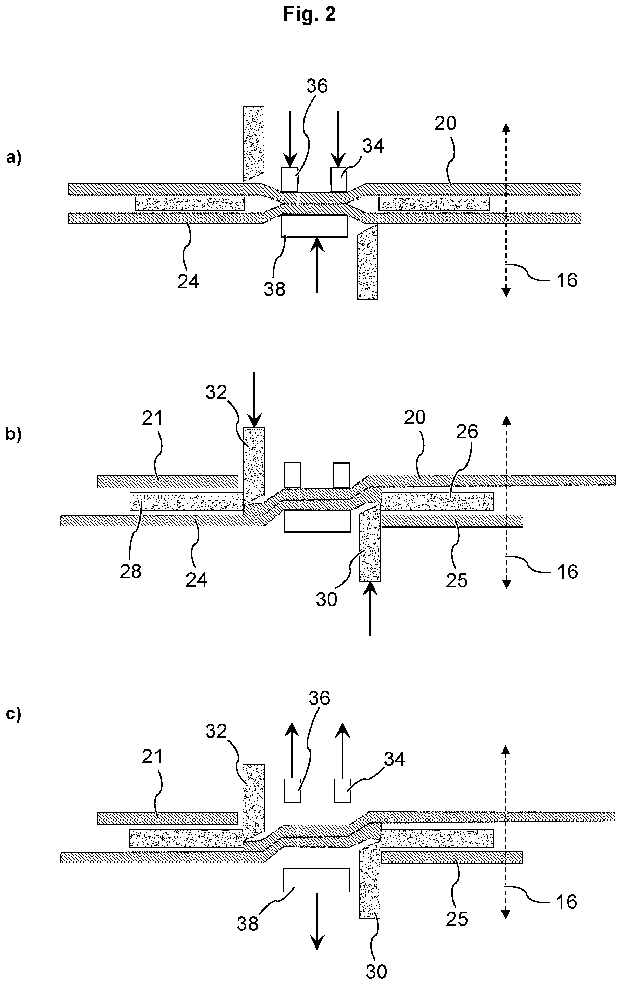

Fig. 2a shows a first step of a splicing method after the first strip of material 20 and the second strip of material 24 are guided through the first and second channels 18, 22 of the splicing head, respectively, as shown in Figs. 1a and 1b. After stopping transport along the processing direction 10 (see Fig. 1a) of the first strip 20 and the second strip 24 to provide static segments of the first and second strips 20, 24 at the position of the splicing head, in the configuration of Fig. 2a, the upstream and downstream welding electrodes 34, 36 and the welding plate 38 have been moved towards one another along the orthogonal direction 16 as indicated by arrows in Fig. 2a. Thus, the first and second strips 20, 24 contact each other and are positioned to be sandwiched between the welding electrodes 34, 36 and the welding plate 38.

In this configuration shown in Fig. 2a, an electric current is applied to the welding station to weld the first strip 20 and the second strip 24 to one another.

Fig. 2b shows a second step, after the first strip 20 and the second strip 24 are welded to one another as shown in Fig. 2a. In the configuration of Fig. 2b, the upstream cutting blade 30 has been moved towards the upstream cutting plate 26 along the orthogonal direction 16 to cut off an upstream end of the second strip 25 from the welded first and second strips. The cutting off of the upstream end of the second strip 25 is promoted by a scissor effect applied to the second strip 24 which is located between an upstream scissor formed by the upstream cutting blade 30 and the upstream cutting plate 26. The upstream scissor does not apply the scissor effect to the first strip 20. The first strip 20 will only be pushed upwards along the orthogonal direction 16 by the moving upstream cutting blade 30 because there is no counter plate to cut against.

At the same time, the downstream cutting blade 32 has been moved towards the downstream cutting plate 28 along the orthogonal direction 16 to cut off a downstream end of the first strip 21 from the welded first and second strips 20, 24. The cutting off of the downstream end of the first strip 21 is promoted by a scissor effect applied to the first strip 20 which is located between a downstream scissor formed by the downstream cutting blade 32 and the downstream cutting plate 28. The downstream scissor does not apply the scissor effect to the second strip 24. The second strip 24 will only be pushed downwards along the orthogonal direction 16 by the moving downstream cutting blade 32 because there is no counter plate to cut against.

The movement of the cutting blades 30, 32 is indicated by arrows in Fig. 2b.

Fig. 2c shows a third step after the portions of the first and second strips 21, 25 have been cut off as shown in Fig. 2b. In the configuration of Fig. 2c, the welding electrodes 34, 36 and the welding plate 38 have been retracted away from the spliced strip along the orthogonal direction 16. The movement of the welding electrodes 34, 36 and the welding plate 38 is indicated by arrows in Fig. 2c. In a subsequent fourth step (not shown), the upstream and downstream cutting blades 30, 32 are also retracted away from the spliced strip along the orthogonal direction 16. In another subsequent step (not shown) which is conducted after the third step and prior to, or simultaneous to, or after the fourth step, the upstream and downstream cutting plates 26, 28 are retracted away from the spliced strip along a third direction, the third direction being orthogonal to both the processing direction 10 and the orthogonal direction 16.

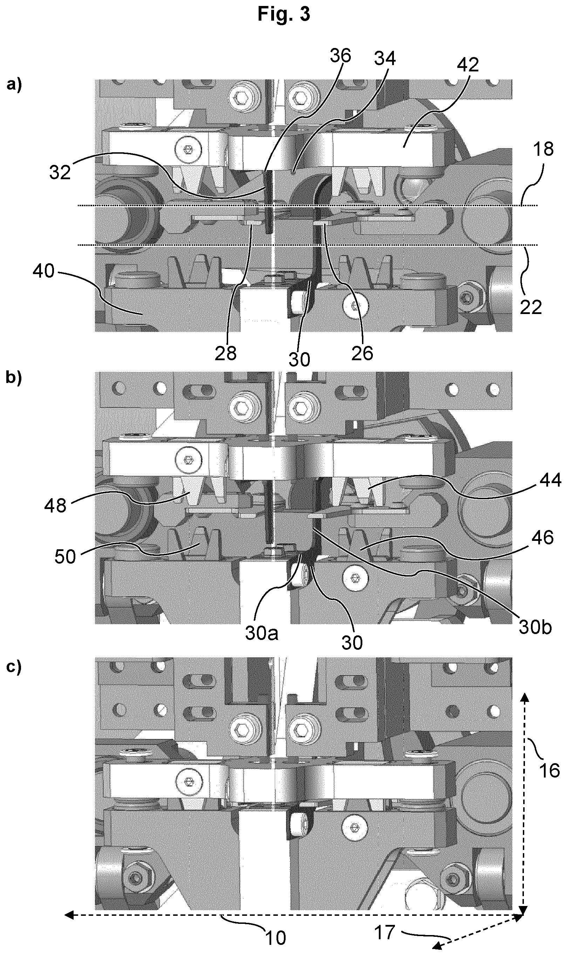

Fig. 3 shows in perspective view a splicing head for splicing two strips of material in three different configurations (Figs. 3a to 3c) with respect to the orthogonal direction 16. The processing direction 10 and the orthogonal direction 16 are indicated in Fig. 3c. Also indicated in Fig. 3c is a third direction 17 which is perpendicular to both the processing direction 10 and the orthogonal direction 16. The third direction 17 is thus directed out of the image plane of Figs. 3a to 3c.

Fig. 3a indicates the first channel 18 and the second channel 22 of the splicing head for guiding the strips of material, the upstream cutting plate 26 and the downstream cutting plate 28, the upstream cutting blade 30 and the downstream cutting blade 32, and the upstream welding electrode 34 and the downstream welding electrode 36. The upstream cutting blade 30 is mounted on a first movable module 40. The downstream cutting blade 32 is mounted on a second movable module 42. In the sequence of Figs. 3a to 3c, the movable modules 40, 42 move towards each other such that, in the configuration shown in Fig. 3c, the upstream cutting blade 30 has moved towards the upstream cutting plate 26 along the orthogonal direction 16 to cut off an upstream end of the second strip (not shown in Fig. 3) and the downstream cutting blade 32 has moved towards the downstream cutting plate 28 along the orthogonal direction 16 to cut off a downstream end of the first strip (not shown in Fig. 3). The welding electrodes 34, 36 move together with, and simultaneous to, the movable module 40.

The upstream and downstream cutting blades 30, 32 of the splicing head of Figs. 3a to 3c fulfil a double-functionality, namely a cutting functionality of cutting the respective strip, and a guiding-and-aligning functionality of guiding the corresponding cutting plates 26, 28 to align with the cutting blades 30, 32 for performing a scissor cut effect and avoiding any accidental bump of the cutting plates 26, 28 on the respective cutting blades 30, 32. Fig. 3b indicates that the upstream cutting blade 30 comprises a horizontal cutting part 30a for cutting the second strip 20 (not shown in Fig. 3) when passing along the second channel 22, and an orthogonal aligning part 30b functioning as an guiding-and-alignment means for guiding and aligning the cutting plate 26 with the horizontal cutting part 30a of the cutting blade 30 to perform a scissor cut effect. The downstream cutting blade 32 also comprises respective horizontal cutting and orthogonal aligning parts.

The splicing head of Fig. 3 further comprises an alignment means for aligning the first and second strips along the third direction 17. The alignment means comprises an upstream top tripod 44, an upstream bottom tripod 46, a downstream top tripod 48, and a downstream bottom tripod 50. The bottom tripods 46, 50 are mounted on the first movable module 40 and the top tripods 44, 48 are mounted on the second movable module 42. The top tripods 44, 48 are each reversely oriented with respect to their respective bottom tripods 46, 50 such that they can engage when the first and second movable modules 40, 42 move towards one another. The first and second strips are guided along the first and second channels between the engaging pairs of tripods 44, 46 and 48, 50 and are thereby aligned along the third direction 17.

## Claims

1. A splicing head for splicing two strips of material, comprising
a processing direction (10) extending from an upstream end (12) to a downstream end (14);
an orthogonal direction (16) perpendicular to the processing direction;
a first channel (18) for guiding a first strip of material (20) and a second channel (22) for guiding a second strip of material (24), the first and second channels being arranged in parallel along the processing direction;
an upstream cutting plate (26) and a downstream cutting plate (28), the upstream and downstream cutting plates (26, 28) being arranged between the first channel (18) and the second channel (22) along the orthogonal direction (16);
an upstream cutting blade (30) and a downstream cutting blade (32), the upstream cutting blade (30) and the downstream cutting blade (32) being arranged at opposite sides of the first and second channels (18, 22) in the orthogonal direction (16) such that the upstream cutting blade (30) is located adjacent to the second channel (22) and the downstream cutting blade (32) is located adjacent to the first channe (18) ; and
a welding station arranged between the upstream cutting blade (30) and the downstream cutting blade (32) along the processing direction (10), the welding station comprising at least one welding electrode (34, 36) and a welding plate (38), the at least one welding electrode (34, 36) and the welding plate I (38) being arranged at opposite sides of the first and second channels i (18, 22) in the orthogonal direction (16).

2. The splicing head according to claim 1, wherein the upstream cutting blade (30) is located directly downstream of the upstream cutting plate (26) and the downstream cutting blade (32) located directly upstream of the downstream cutting plate (28).

3. The splicing head according to claim 1 or claim 2, wherein the at least one welding electrode comprises an upstream welding electrode (34) and a downstream welding electrode (36), preferably, wherein the welding station is configured to apply a current pulse between the upstream welding electrode and the downstream welding electrode.

4. The splicing head according to any of the preceding claims, wherein the upstream cutting plate (26) and the downstream cutting plate (28) are configured to be movable along a third direction, the third direction (17) being perpendicular to both the processing direction and the orthogonal direction.

5. The splicing head according to any of the preceding claims, wherein one or both of the upstream and downstream cutting blades (30, 32) have an L-shape comprising a horizontal cutting part (30a) for cutting a strip of material, and an orthogonal aligning part (30b) being parallel to the orthogonal direction and functioning as a guiding-and-alignment means for guiding and aligning the cutting plate with respect to the respective cutting blade.

6. The splicing head according to any of the preceding claims, comprising an alignment means for aligning the first and second strips on top of each other, wherein the alignment means is provided by one or more pairs of engaging structures being arranged at opposite sides of the first and second channels (18, 22) in the orthogonal direction (16), such that a first structure of a pair is located adjacent to the second channel (22) and an engaging second structure of said pair is located adjacent to the first channel (18), and wherein the splicing head is configured for guiding the first and second strips along the first and second channels (18, 22) between the engaging pairs of structures to align the first and second strips on top of each other, preferably wherein the engaging structures are configured as engaging tripods (44, 46, 48, 50).

7. A method for splicing two strips of material comprising steps of,
providing a splicing head according to any of claims 1 to 6;
providing a first strip of material (20) and a second strip of material (24);
guiding the first and second strips (20, 24) along the first and second channels (18, 22) of the splicing head;
stopping transport along the processing direction (10) of at least a segment of the first strip (20) and at least a segment of the second strip (24) to provide static segments of the first and second strips at the position of the splicing head;
moving the at least one welding electrode (34, 36) and the welding plate (38) towards one another along the orthogonal direction (16) such the first and second strips (20, 24) contact each other and are positioned between the at least one welding electrode (34, 36) and the welding plate (38);
applying an electric current to the welding station to weld the first strip and the second strip to one another;
moving the upstream cutting blade (30) towards the upstream cutting plate (26) along the orthogonal direction (16) to cut off an upstream end of the second strip from the welded first and second strips; and
moving the downstream cutting blade (32) towards the downstream cutting plate (28) along the orthogonal direction (16) to cut off a downstream end of the first strip from the welded first and second strips.

8. The method according to claim 7, further comprising, after the step of moving the downstream cutting blade (32) towards the downstream cutting plate (28) along the orthogonal direction to cut off a downstream end of the first strip from the welded first and second strips (20, 24), a step of retracting the at least one welding electrode (34, 36) and the welding plate (38) along the orthogonal direction and then, optionally, a step of retracting the upstream and downstream cutting blades (30, 32) along the orthogonal direction (16).

9. The method according to claim 7 or claim 8, comprising providing a splicing head according to claim 4, and further comprising, after the step of moving the downstream cutting blade (32) towards the downstream cutting plate (28) along the orthogonal direction to cut off a downstream end of the first strip from the welded first and second strips, a step of retracting the upstream cutting plate (26) and the downstream cutting plate (28) along the third direction (17).

10. The method according to any of claims 7 to 9, wherein the first and second strips (20, 24) of material comprise a susceptor material, preferably wherein the susceptor material comprises one or more metals, more preferably wherein the susceptor material comprises aluminium.

11. The method according to claim 10, wherein the first and second strips (20, 24) are susceptor strips for use in an aerosol-generating article comprising an aerosol-forming substrate.

12. The method according to any of claims 7 to 11, further comprising a buffer unit provided downstream of the splicing head, preferably, wherein the method comprises a step of buffering a given length of the first strip (20) in the buffer unit before the step of splicing.

13. The method according to claim 12, wherein a part of the processing line downstream of the buffer unit is either stopped, or operated at lowered speed, or operated at normal speed, during the step of splicing the first strip (20) and the second strip (24) at the splicing head.

14. An apparatus for splicing two strips of material, comprising
a processing line comprising an upstream end and a downstream end and being configured for processing a first strip (20) of material and a second strip (24) of material; and
a splicing head in accordance with any of claims 1 to 6 located between the upstream end and the downstream end of the processing line.

15. The apparatus according to claim 14, comprising a buffer unit adapted to buffer a variable amount of the first strip (20) or of the second strip (24), the buffer unit being located downstream the splicing head.

## Patentansprüche

1. Spleißkopf zum Spleißen von zwei Materialstreifen, umfassend
eine Verarbeitungsrichtung (10), die sich von einem vorgelagerten Ende (12) zu einem nachgelagerten Ende (14) erstreckt;
eine orthogonale Richtung (16) senkrecht zu der Verarbeitungsrichtung;
einen ersten Kanal (18) zum Führen eines ersten Materialstreifens (20) und einen zweiten Kanal (22) zum Führen eines zweiten Materialstreifens (24), wobei der erste und der zweite Kanal parallel entlang der Verarbeitungsrichtung angeordnet sind;
eine vorgelagerte Schneidplatte (26) und eine nachgelagerte Schneidplatte (28), wobei die vorgelagerten und nachgelagerten Schneidplatten (26, 28) entlang der orthogonalen Richtung (16) zwischen dem ersten Kanal (18) und dem zweiten Kanal (22) angeordnet sind;
eine vorgelagerte Schneidklinge (30) und eine nachgelagerte Schneidklinge (32), wobei die vorgelagerte Schneidklinge (30) und die nachgelagerte Schneidklinge (32) an gegenüberliegenden Seiten des ersten und zweiten Kanals (18, 22) in der orthogonalen Richtung (16) angeordnet sind, sodass die vorgelagerte Schneidklinge (30) angrenzend an den zweiten Kanal (22) und die nachgelagerte Schneidklinge (32) angrenzend an den ersten Kanal (18) angeordnet ist; und
eine Schweißstation, die entlang der Verarbeitungsrichtung (10) zwischen der vorgelagerten Schneidklinge (30) und der nachgelagerten Schneidklinge (32) angeordnet ist, wobei die Schweißstation wenigstens eine Schweißelektrode (34, 36) und eine Schweißplatte (38) aufweist, wobei die wenigstens eine Schweißelektrode (34, 36) und die Schweißplatte (38) an gegenüberliegenden Seiten des ersten und zweiten Kanals (18, 22) in der orthogonalen Richtung (16) angeordnet sind.

2. Spleißkopf nach Anspruch 1, wobei die vorgelagerte Schneidklinge (30) unmittelbar hinter der vorgelagerten Schneidplatte (26) angeordnet ist und die nachgelagerte Schneidklinge (32) unmittelbar vor der nachgelagerten Schneidplatte (28) angeordnet ist.

3. Spleißkopf nach Anspruch 1 oder Anspruch 2, wobei die wenigstens eine Schweißelektrode eine vorgelagerte Schweißelektrode (34) und eine nachgelagerte Schweißelektrode (36) aufweist, wobei die Schweißstation bevorzugt eingerichtet ist, um einen Stromimpuls zwischen der vorgelagerten Schweißelektrode und der nachgelagerten Schweißelektrode anzulegen.

4. Spleißkopf nach einem beliebigen der vorhergehenden Ansprüche, wobei die vorgelagerte Schneidplatte (26) und die nachgelagerte Schneidplatte (28) eingerichtet sind, um entlang einer dritten Richtung bewegbar zu sein, wobei die dritte Richtung (17) sowohl zu der Verarbeitungsrichtung als auch zu der orthogonalen Richtung senkrecht ist.

5. Spleißkopf nach einem beliebigen der vorhergehenden Ansprüche, wobei eine oder beide der vorgelagerten und nachgelagerten Schneidklinge (30, 32) eine L-Form aufweist, die einen horizontalen Schneidabschnitt (30a) zum Schneiden eines Materialstreifens und einen orthogonalen Ausrichtungsabschnitt (30b) umfasst, der parallel zu der orthogonalen Richtung verläuft und als Führungs- und Ausrichtungsmittel zum Führen und Ausrichten der Schneidplatte in Bezug auf die jeweilige Schneidklinge dient.

6. Spleißkopf nach einem beliebigen der vorhergehenden Ansprüche, umfassend ein Ausrichtungsmittel zum aufeinander Ausrichten des ersten und zweiten Streifens, wobei das Ausrichtungsmittel durch ein oder mehrere Paare von ineinandergreifenden Strukturen bereitgestellt ist, die an gegenüberliegenden Seiten des ersten und zweiten Kanals (18, 22) in der orthogonalen Richtung (16) angeordnet sind, sodass eine erste Struktur eines Paars an den zweiten Kanal (22) angrenzt und eine eingreifende zweite Struktur des Paars an den ersten Kanal (18) angrenzt, und
wobei der Spleißkopf zum Führen des ersten und zweiten Streifens entlang des ersten und zweiten Kanals (18, 22) zwischen den ineinandergreifenden Paaren von Strukturen ausgebildet ist, um den ersten und zweiten Streifen aufeinander auszurichten, bevorzugt wobei die ineinandergreifenden Strukturen als ineinandergreifende Dreifüße (44, 46, 48, 50) ausgebildet sind.

7. Verfahren zum Spleißen von zwei Materialstreifen, umfassend die Schritte:
Bereitstellen eines Spleißkopfs nach einem der Ansprüche 1 bis 6;
Bereitstellen eines ersten Materialstreifens (20) und eines zweiten Materialstreifens (24);
Führen des ersten und zweiten Streifens (20, 24) entlang des ersten und zweiten Kanals (18, 22) des Spleißkopfs;
Anhalten des Transports entlang der Verarbeitungsrichtung (10) von wenigstens einem Segment des ersten Streifens (20) und wenigstens einem Segment des zweiten Streifens (24), um statische Segmente des ersten und zweiten Streifens an der Position des Spleißkopfs bereitzustellen;
Bewegen der wenigstens einen Schweißelektrode (34, 36) und der Schweißplatte (38) aufeinander zu entlang der orthogonalen Richtung (16), sodass der erste und zweite Streifen (20, 24) einander kontaktieren und zwischen der wenigstens einen Schweißelektrode (34, 36) und der Schweißplatte (38) angeordnet sind;
Anlegen eines elektrischen Stroms an die Schweißstation, um den ersten Streifen und den zweiten Streifen miteinander zu verschweißen;
Bewegen der vorgelagerten Schneidklinge (30) in Richtung der vorgelagerten Schneidplatte (26) entlang der orthogonalen Richtung (16), um ein vorgelagertes Ende des zweiten Streifens von den verschweißten ersten und zweiten Streifen abzuschneiden; und
Bewegen der nachgelagerten Schneidklinge (32) in Richtung der nachgelagerten Schneidplatte (28) entlang der orthogonalen Richtung (16), um ein nachgelagertes Ende des ersten Streifens von den verschweißten ersten und zweiten Streifen abzuschneiden.

8. Verfahren nach Anspruch 7, ferner umfassend, nach dem Schritt des Bewegens der nachgelagerten Schneidklinge (32) in Richtung der nachgelagerten Schneidplatte (28) entlang der orthogonalen Richtung, um ein nachgelagertes Ende des ersten Streifens von den verschweißten ersten und zweiten Streifen (20, 24) abzuschneiden, einen Schritt des Zurückziehens der wenigstens einen Schweißelektrode (34, 36) und der Schweißplatte (38) entlang der orthogonalen Richtung und dann, optional, einen Schritt des Zurückziehens der vorgelagerten und nachgelagerten Schneidklinge (30, 32) entlang der orthogonalen Richtung (16).

9. Verfahren nach Anspruch 7 oder Anspruch 8, umfassend ein Bereitstellen eines Spleißkopfs nach Anspruch 4, und ferner umfassend, nach dem Schritt des Bewegens der nachgelagerten Schneidklinge (32) in Richtung der nachgelagerten Schneidplatte (28) entlang der orthogonalen Richtung, um ein nachgelagertes Ende des ersten Streifens von den verschweißten ersten und zweiten Streifen abzuschneiden, einen Schritt des Zurückziehens der vorgelagerten Schneidplatte (26) und der nachgelagerten Schneidplatte (28) entlang der dritten Richtung (17).

10. Verfahren nach einem der Ansprüche 7 bis 9, wobei der erste und zweite Materialstreifen (20, 24) ein Suszeptormaterial umfassen, bevorzugt wobei das Suszeptormaterial ein oder mehrere Metalle umfasst, besonders bevorzugt wobei das Suszeptormaterial Aluminium umfasst.

11. Verfahren nach Anspruch 10, wobei der erste und zweite Streifen (20, 24) Suszeptorstreifen zur Verwendung in einem aerosolerzeugenden Artikel umfassend ein aerosolbildendes Substrat sind.

12. Verfahren nach einem der Ansprüche 7 bis 11, ferner umfassend eine Speichereinheit, die nachgelagert zu dem Spleißkopf bereitgestellt ist, bevorzugt wobei das Verfahren einen Schritt des Speicherns einer vorgegebenen Länge des ersten Materialstreifens (20) in der Speichereinheit vor dem Schritt des Spleißens umfasst.

13. Verfahren nach Anspruch 12, wobei ein Teil der Verarbeitungslinie nachgelagert zu der Speichereinheit während des Schritts des Spleißens des ersten Materialstreifens (20) und des zweiten Materialstreifens (24) an dem Spleißkopf entweder angehalten wird, oder mit verringerter Geschwindigkeit betrieben wird, oder mit normaler Geschwindigkeit betrieben wird.

14. Vorrichtung zum Spleißen von zwei Materialstreifen, umfassend
eine Verarbeitungslinie, die ein vorgelagertes Ende und ein nachgelagertes Ende umfasst und zum Verarbeiten eines ersten Materialstreifens (20) und eines zweiten Materialstreifens (24) ausgebildet ist; und
einen Spleißkopf nach einem der Ansprüche 1 bis 6, der zwischen dem vorgelagerten Ende und dem nachgelagerten Ende der Verarbeitungslinie angeordnet ist.

15. Vorrichtung nach Anspruch 14, umfassend eine Speichereinheit, die zum Speichern einer variablen Menge des ersten Materialstreifens (20) oder des zweiten Materialstreifens (24) eingerichtet ist, wobei die Speichereinheit nachgelagert zu dem Spleißkopf angeordnet ist.

## Revendications

1. Tête de jonction destinée à joindre deux bandes de matériau, comprenant
une direction de traitement (10) s'étendant d'une extrémité amont (12) à une extrémité aval (14) ;
une direction orthogonale (16) perpendiculaire à la direction de traitement ;
un premier canal (18) destiné à guider une première bande de matériau (20) et un deuxième canal (22) destiné à guider une deuxième bande de matériau (24), les premier et deuxième canaux étant agencés en parallèle le long de la direction de traitement ;
une plaque de coupe amont (26) et une plaque de coupe aval (28), les plaques de coupe amont et aval (26, 28) étant agencées entre le premier canal (18) et le deuxième canal (22) le long de la direction orthogonale (16) ;
une lame de coupe amont (30) et une lame de coupe aval (32), la lame de coupe amont (30) et la lame de coupe aval (32) étant agencées sur des côtés opposés des premier et deuxième canaux (18, 22) dans la direction orthogonale (16) de telle sorte que la lame de coupe amont (30) est située adjacente au deuxième canal (22) et la lame de coupe aval (32) est située adjacente au premier canal (18) ; et
un poste de soudage agencé entre la lame de coupe amont (30) et la lame de coupe aval (32) le long de la direction de traitement (10), le poste de soudage comprenant au moins une électrode de soudage (34, 36) et une plaque de soudage (38), l'au moins une électrode de soudage (34, 36) et la plaque de soudage (38) étant agencées sur des côtés opposés des premier et deuxième canaux (18, 22) dans la direction orthogonale (16).

2. Tête de jonction selon la revendication 1, dans laquelle la lame de coupe amont (30) est située directement en aval de la plaque de coupe amont (26) et la lame de coupe aval (32) est située directement en amont de la plaque de coupe aval (28).

3. Tête de jonction selon la revendication 1 ou la revendication 2, dans laquelle l'au moins une électrode de soudage comprend une électrode de soudage amont (34) et une électrode de soudage aval (36), de préférence, dans laquelle le poste de soudage est configuré pour appliquer une impulsion de courant entre l'électrode de soudage amont et l'électrode de soudage aval.

4. Tête de jonction selon l'une quelconque des revendications précédentes, dans laquelle la plaque de coupe amont (26) et la plaque de coupe aval (28) sont configurées pour être mobiles le long d'une troisième direction, la troisième direction (17) étant perpendiculaire à la fois à la direction de traitement et à la direction orthogonale.

5. Tête de jonction selon l'une quelconque des revendications précédentes, dans laquelle l'une ou les deux parmi les lames de coupe amont et aval (30, 32) ont une forme en L comprenant une partie de coupe horizontale (30a) destinée à couper une bande de matériau, et une partie d'alignement orthogonal (30b), parallèle à la direction orthogonale et fonctionnant comme un moyen de guidage et d'alignement, destinée à guider et à aligner la plaque de coupe par rapport à la lame de coupe respective.

6. Tête de jonction selon l'une quelconque des revendications précédentes, comprenant un moyen d'alignement destiné à aligner les première et deuxième bandes l'une au-dessus de l'autre, dans laquelle le moyen d'alignement est fourni par une ou plusieurs paires de structures de mise en prise agencées sur des côtés opposés des premier et deuxième canaux (18, 22) dans la direction orthogonale (16), de telle sorte qu'une première structure d'une paire est située adjacente au deuxième canal (22) et qu'une deuxième structure de mise en prise de ladite paire est située adjacente au premier canal (18), et
dans laquelle la tête de jonction est configurée pour guider les première et deuxième bandes le long des premier et deuxième canaux (18, 22) entre les paires de structures de mise en prise afin d'aligner les première et deuxième bandes l'une au-dessus de l'autre, de préférence dans laquelle les structures de mise en prise sont configurées comme des trépieds de mise en prise (44, 46, 48, 50).

7. Procédé pour joindre deux bandes de matériau comprenant les étapes suivantes,
la fourniture d'une tête de jonction selon l'une quelconque des revendications 1 à 6 ;
la fourniture d'une première bande de matériau (20) et d'une deuxième bande de matériau (24) ;
le guidage des première et deuxième bandes (20, 24) le long des premier et deuxième canaux (18, 22) de la tête de jonction ;
l'arrêt du transport le long de la direction de traitement (10) d'au moins un segment de la première bande (20) et d'au moins un segment de la deuxième bande (24) pour fournir des segments statiques des première et deuxième bandes au niveau de la position de la tête de jonction ;
le déplacement d'au moins une électrode de soudage (34, 36) et de la plaque de soudage (38) l'une vers l'autre le long de la direction orthogonale (16) de sorte que les première et deuxième bandes (20, 24) sont en contact l'une avec l'autre et sont positionnées entre l'au moins une électrode de soudage (34, 36) et la plaque de soudage (38) ;
l'application d'un courant électrique au poste de soudage pour souder la première bande et la deuxième bande l'une à l'autre ;
le déplacement de la lame de coupe amont (30) vers la plaque de coupe amont (26) le long de la direction orthogonale (16) pour découper une extrémité amont de la deuxième bande à partir des première et deuxième bandes soudées ; et
le déplacement de la lame de coupe aval (32) vers la plaque de coupe aval (28) le long de la direction orthogonale (16) pour découper une extrémité aval de la première bande à partir des première et deuxième bandes soudées.

8. Procédé selon la revendication 7, comprenant en outre, après l'étape de déplacement de la lame de coupe aval (32) vers la plaque de coupe aval (28) le long de la direction orthogonale pour découper une extrémité aval de la première bande à partir des première et deuxième bandes soudées (20, 24), une étape de rétraction d'au moins une électrode de soudage (34, 36) et de la plaque de soudage (38) le long de la direction orthogonale et ensuite, facultativement, une étape de rétraction des lames de coupe amont et aval (30, 32) le long de la direction orthogonale (16).

9. Procédé selon la revendication 7 ou la revendication 8, comprenant la fourniture d'une tête de jonction selon la revendication 4, et comprenant en outre, après l'étape de déplacement de la lame de coupe aval (32) vers la plaque de coupe aval (28) le long de la direction orthogonale pour découper une extrémité aval de la première bande à partir des première et deuxième bandes soudées, une étape de rétraction de la plaque de coupe amont (26) et de la plaque de coupe aval (28) le long de la troisième direction (17).

10. Procédé selon l'une quelconque des revendications 7 à 9, dans lequel les première et deuxième bandes (20, 24) de matériau comprennent un matériau suscepteur, de préférence dans lequel le matériau suscepteur comprend un ou plusieurs métaux, de manière davantage préférée dans lequel le matériau suscepteur comprend de l'aluminium.

11. Procédé selon la revendication 10, dans lequel les première et deuxième bandes (20, 24) sont des bandes de suscepteur destinées à être utilisées dans un article de génération d'aérosol comprenant un substrat formant aérosol.

12. Procédé selon l'une quelconque des revendications 7 à 11, comprenant en outre une unité tampon prévue en aval de la tête de jonction, de préférence, dans lequel le procédé comprend une étape consistant à stocker temporairement une longueur donnée de la première bande (20) dans l'unité tampon avant l'étape de jonction.

13. Procédé selon la revendication 12, dans lequel une partie de la ligne de traitement en aval de l'unité tampon est soit arrêtée, soit mise en fonctionnement à une vitesse réduite, soit mise en fonctionnement à une vitesse normale, pendant l'étape de jonction de la première bande (20) et de la deuxième bande (24) au niveau de la tête de jonction.

14. Appareil pour joindre deux bandes de matériau, comprenant
une ligne de traitement comprenant une extrémité amont et une extrémité aval et étant configurée pour traiter une première bande (20) de matériau et une deuxième bande (24) de matériau ; et
une tête de jonction selon l'une quelconque des revendications 1 à 6 située entre l'extrémité amont et l'extrémité aval de la ligne de traitement.

15. Appareil selon la revendication 14, comprenant une unité tampon adaptée pour stocker temporairement une quantité variable de la première bande (20) ou de la deuxième bande (24), l'unité tampon étant située en aval de la tête de jonction.
